# EUROPÄISCHE PATENTANMELDUNG

(11) **EP 4 765 069 A1**
(43) Veröffentlichungstag der Anmeldung: **24.06.2026**
(21) Anmeldenummer: 25209139.2
(22) Anmeldetag: 16.10.2025
(51) Int. Cl.: G08G 1/16

(54) **FAHRERASSISTENZSYSTEM FÜR EIN KRAFTFAHRZEUG, KRAFTFAHRZEUG SOWIE VERFAHREN**

(30) Priorität: 20.12.2024 DE 102024139474
(71) Anmelder: AUDI Aktiengesellschaft, 85057 Ingolstadt (DE)
(72) Erfinder: Ambrosetti, Sebastien, 86579 Waidhofen (DE)
(74) Vertreter: Hofstetter, Schurack & Partner

(57) **Zusammenfassung**

Die Erfindung betrifft ein Fahrerassistenzsystem (3) für ein Kraftfahrzeug (1), mit einer Positionserfassungseinrichtung (4) zum Erfassen einer Position (5) des Kraftfahrzeugs (1), mit einer Empfangseinrichtung (9) zum Empfangen von wenigstens ein weiteres Fahrzeug (7, 8) charakterisierenden Daten, welche zumindest eine Position (10) des weiteren Fahrzeugs (7, 8) beschreiben, mit einer elektronischen Recheneinrichtung (13), welche dazu ausgebildet ist, in Abhängigkeit von den mittels der Empfangseinrichtung (9) empfangenen Daten die Position (10) des weiteren Fahrzeugs (7, 8) zu ermitteln und in Abhängigkeit von der erfassten Position (5) des Kraftfahrzeugs (1) und in Abhängigkeit von den empfangenen Daten eine eine Umgebung (6) des Kraftfahrzeugs (1) charakterisierende, virtuelle Karte (14) mit der erfassten Position (5) des Kraftfahrzeugs (1) und mit der ermittelten Position (10) des weiteren Fahrzeugs (7, 8) zu erzeugen.

## Beschreibung

Die Erfindung betrifft ein Fahrerassistenzsystem für ein Kraftfahrzeug gemäß dem Oberbegriff des Patentanspruchs 1. Des Weiteren betrifft die Erfindung ein Kraftfahrzeug mit einem solchen Fahrerassistenzsystem sowie ein Verfahren zum Betreiben eines Kraftfahrzeugs gemäß dem Oberbegriff des Patentanspruchs 10.

Car2x ist eine im Stand der Technik bekannte Möglichkeit, bei der Fahrzeuge mit ihrer Umwelt ("x"), aber auch untereinander kommunizieren. Kommunizieren die Fahrzeuge untereinander, so kann dies als Car2Car-Communication bezeichnet werden. Ein Datenaustausch zwischen zwei, beispielsweise benachbarten, Fahrzeugen ist demnach ein Sonderfall von Car2X und heißt dementsprechend Car2Car. Mittels Car2Car-Kommunikation können Kraftfahrzeuge Informationen, beispielsweise über andere Fahrzeuge erhalten, welche sich insbesondere in Nähe des Kraftfahrzeugs befinden. Dadurch können die Kraftfahrzeuge Informationen, beispielsweise über einen Verkehr, eventuelle Staus und/oder Unfälle erhalten. Üblicherweise werden dabei jedoch lediglich wenige Ereignisse über Car2x kommuniziert, wodurch beispielsweise lediglich ein Ereignis, beispielsweise in Form eines Pannenfahrzeugs, und seine Position, beispielsweise in Form von GPS-Daten, weitergegeben werden.

Die DE 10 2022 003 165 A1 offenbart ein Fahrzeugassistenzsystem zur zumindest teilweise autonomen Steuerung eines Fahrzeugs mit einer Fahrzeugrecheneinheit, die dazu eingerichtet ist, anhand von über eigene Sensoren des Fahrzeugs erfassten und/oder an das Fahrzeug übermittelten Sensordaten ein Modell des Fahrzeugs in räumlicher Relation zu in den Sensordaten erkannten Objekten zu erzeugen, wobei das Fahrzeug Teil einer Fahrzeugflotte in einem Fahrzeugnetzwerk ist, welches ferner einen fahrzeugexternen Server umfasst, welcher mit Flottenfahrzeugen der Fahrzeugflotte in Kommunikationsverbindung steht.

Zudem ist aus der DE 10 2020 105 739 A1 ein System zur Identifikation plötzlicher Gefahrenstellen im Straßenverkehr als bekannt zu entnehmen, umfassend ein Backend und eine Vielzahl an Fahrzeugen, wobei zumindest ein Fahrzeug eine Sensoreinheit umfasst, die eingerichtet ist, Fahrverhaltensdaten des Fahrers des Fahrzeugs und technische Daten des Fahrzeugs zu erfassen und technische Daten des Fahrzeugs zu erfassen.

Des Weiteren offenbart die DE 10 2017 203 838 A1 ein Verfahren zur Umfelderfassung, bei welchem ein erstes Kraftfahrzeug sein Fahrzeugumfeld mittels wenigstens eines Sensors erfasst, wobei das erste Kraftfahrzeug sein Fahrzeugumfeld betreffende Sensordaten des Sensors an eine fahrzeugexterne Servereinrichtung überträgt, zumindest ein zweites Kraftfahrzeug mit wenigstens einem Sensor sein Fahrzeugumfeld betreffende Sensordaten des Sensors an die fahrzeugexterne Servereinrichtung überträgt und die fahrzeugexterne Servereinrichtung die übertragenen Sensordaten der Kraftfahrzeuge fusioniert und basierend darauf ein Umfeldmodell vom Fahrzeugumfeld des ersten Kraftfahrzeugs generiert.

Der vorliegenden Erfindung liegt die Aufgabe zugrunde, ein Fahrerassistenzsystem für ein Kraftfahrzeug, ein Kraftfahrzeug sowie ein Verfahren zum Betreiben eines Kraftfahrzeugs zu schaffen, sodass ein Fahrer des Kraftfahrzeugs besonders gut bei seiner Fahraufgabe unterstützt werden kann.

Die Aufgabe wird durch die Gegenstände der unabhängigen

Patentansprüche gelöst. Vorteilhafte Weiterentwicklungen der Erfindung sind durch die abhängigen Patentansprüche, die folgende Beschreibung und die Figuren beschrieben.

Ein erster Aspekt der Erfindung betrifft ein Fahrerassistenzsystem für ein Kraftfahrzeug beziehungsweise des Kraftfahrzeugs. Das Kraftfahrzeugs ist bevorzugt als Kraftwagen, insbesondere als Personenkraftwagen oder als Lastkraftwagen, oder als Personenbus oder Motorrad ausgestaltet.

Das Fahrerassistenzsystem weist wenigstens eine Positionserfassungseinrichtung zum Erfassen einer, insbesondere aktuellen, Position des Kraftfahrzeugs auf. Dies bedeutet, dass mittels der Positionserfassungseinrichtung die, insbesondere aktuelle, Position des Kraftfahrzeugs erfassbar ist oder erfasst wird, insbesondere ermittelbar ist oder ermittelt wird. In anderen Worten ist die Positionserfassungseinrichtung zum Erfassen der Position des Kraftfahrzeugs ausgebildet. Unter der Position des Kraftfahrzeugs wird insbesondere eine Position des Kraftfahrzeugs in einer Umgebung des Kraftfahrzeugs verstanden. Demnach kann unter der Position insbesondere ein Standort des Kraftfahrzeugs, das heißt ein Aufenthaltsort des Kraftfahrzeugs in der Umgebung, verstanden werden. Unter dem Erfassen der Position kann insbesondere ein Detektieren der Position verstanden werden. Das Erfassen der Position des Kraftfahrzeugs mittels der Positionserfassungseinrichtung erfolgt beispielsweise mittels GPS.

Ferner weist das Fahrerassistenzsystem wenigstens eine Empfangseinrichtung zum Empfangen von wenigstens ein weiteres Fahrzeug charakterisierenden Daten auf. Dies bedeutet, dass mittels der Empfangseinrichtung die das weitere Fahrzeug charakterisierenden Daten empfangbar sind oder empfangen werden. Das weitere Fahrzeug ist ein von dem Kraftfahrzeug unterschiedliches Fahrzeug. Beispielsweise ist das weitere Fahrzeug als Kraftfahrzeug, das heißt als weiteres Kraftfahrzeug, ausgebildet. Darunter, dass die Daten das weitere Fahrzeug charakterisieren, kann insbesondere verstanden werden, dass die Daten das Fahrzeug, das heißt wenigstens eine Eigenschaft des weiteren Fahrzeugs, beschreiben. Die Daten beschreiben, insbesondere umfassen, zumindest eine Position des weiteren Fahrzeugs. In anderen Worten charakterisieren die Daten zumindest die Position des weiteren Fahrzeugs. Die Daten können demnach als Positionsdaten bezeichnet werden oder können zumindest die Positionsdaten umfassen. Unter der Position des weiteren Fahrzeugs wird insbesondere eine Position des weiteren Fahrzeugs in der Umgebung verstanden. Demnach kann unter der Position des weiteren Fahrzeugs insbesondere ein Standort, das heißt insbesondere ein Aufenthaltsort des weiteren Fahrzeugs in der Umgebung, verstanden werden. Die Position des weiteren Fahrzeugs ist beispielsweise eine aktuelle oder eine vergangene Position des weiteren Fahrzeugs. Unter der aktuellen Position wird insbesondere verstanden, dass das Fahrzeug beim Empfangen der Daten von der Empfangseinrichtung, das heißt während eines Empfangszeitpunkts, bei welchem die Daten von der Empfangseinrichtung des Kraftfahrzeugs empfangen werden, die Position zumindest annähernd, das heißt immer noch die Position, aufweist. Unter der vergangenen Position wird insbesondere verstanden, dass beim Empfangen der Daten von der Empfangseinrichtung, das heißt während des Empfangszeitpunkts, bereits eine Zeitspanne vergangen ist, seit der die durch die Daten beschriebene Position ermittelt worden ist. Dies bedeutet, dass die Position des weiteren Fahrzeugs veraltet sein kann. Die Zeitspanne beträgt beispielsweise wenigstens eine Sekunde, insbesondere mehrere Sekunden, oder wenigstens eine Minute, insbesondere mehrere Minuten.

Die Daten sind beispielsweise von wenigstens einer bezogen auf das Kraftfahrzeug externen elektronischen Recheneinrichtung gesendete Daten. Somit werden die Daten mittels der externen elektronischen Recheneinrichtung beispielsweise, insbesondere an das Kraftfahrzeug beziehungsweise dessen Empfangseinrichtung, gesendet. Die elektronische Recheneinrichtung ist beispielsweise Teil des weiteren Fahrzeugs, wodurch von dem weiteren Fahrzeug die Daten, insbesondere an das Kraftfahrzeug beziehungsweise dessen Empfangseinrichtung, gesendet werden können. Alternativ ist die elektronische Recheneinrichtung beispielsweise als fahrzeugexterne elektronische Recheneinrichtung, beispielsweise als Server, ausgebildet. Unter dem Empfangen und/oder unter dem Senden der Daten kann insbesondere Car2x-Kommunikation, beispielsweise Car2Car-Kommunikation, verstanden werden.

Ferner weist das Fahrerassistenzsystem wenigstens eine elektronische Recheneinrichtung auf, unter welcher insbesondere eine Datenverarbeitungsanlage verstanden werden kann. Die elektronische Recheneinrichtung ist demnach insbesondere als bezogen auf das Kraftfahrzeug fahrzeuginterne elektronische Recheneinrichtung ausgebildet. Somit ist die elektronische Recheneinrichtung insbesondere separat von der externen elektronischen Recheneinrichtung ausgebildet. Die elektronische Recheneinrichtung ist dazu ausgebildet, in Abhängigkeit von den mittels der Empfangseinrichtung empfangenen Daten die, insbesondere aktuelle, Position des weiteren Fahrzeugs zu ermitteln, insbesondere zu berechnen. Dies bedeutet, dass mittels der elektronische Recheneinrichtung in Abhängigkeit von den mittels der Empfangseinrichtung empfangenen Daten die, insbesondere aktuelle, Position des weiteren Fahrzeugs ermittelbar ist oder ermittelt wird, insbesondere berechenbar ist oder berechnet wird. In anderen Worten werden die mittels der elektronische Recheneinrichtung empfangenen Daten als Eingangsgröße verwendet, um mittels der elektronischen Recheneinrichtung die, insbesondere aktuelle, Position des weiteren Fahrzeugs zu ermitteln. Unter dem Ermitteln der Position kann insbesondere ein Prognostizieren, das heißt ein Vorhersagen, der Position verstanden werden. Wenn die Daten die aktuelle Position des weiteren Fahrzeugs beschreiben, erfolgt bei dem Ermittelt der Position des weiteren Fahrzeugs mittels der elektronischen Recheneinrichtung beispielsweise ein Festsetzen beziehungsweise ein Festlegen der durch die Daten beschriebenen Position als die Position des Fahrzeugs. Wenn die Daten die vergangene Position des weiteren Fahrzeugs beschreiben, erfolgt bei dem Ermitteln der aktuellen Position mittels der elektronischen Recheneinrichtung beispielsweise ein Ermitteln der aktuellen Position des Fahrzeugs in Abhängigkeit von der vergangenen Position, das heißt beispielsweise ein Anpassen beziehungsweise ein Aktualisieren der vergangenen Position, insbesondere um die aktuelle Position zu erhalten, das heißt beispielsweise zu berechnen.

Ferner ist die elektronische Recheneinrichtung dazu ausgebildet, in Abhängigkeit von der erfassten Position des Kraftfahrzeugs und in Abhängigkeit von den empfangenen Daten, und insbesondere in Abhängigkeit von der ermittelten Position des weiteren Fahrzeugs, eine die Umgebung des Kraftfahrzeugs charakterisierende, virtuelle Karte, insbesondere Straßenkarte, mit der erfassten Position des Kraftfahrzeugs und mit der ermittelten Position des weiteren Fahrzeugs zu erzeugen. Dies bedeutet, dass mittels der elektronischen Recheneinrichtung in Abhängigkeit von der erfassten Position des Kraftfahrzeugs und in Abhängigkeit von den empfangenen Daten, insbesondere in Abhängigkeit von der ermittelten Position, die die Umgebung des Kraftfahrzeugs charakterisierende, virtuelle Karte mit der erfassten Position des Kraftfahrzeugs und mit der ermittelten Position des weiteren Fahrzeugs erzeugbar ist oder erzeugt wird. Mit anderen Worten ausgedrückt wird mittels der elektronischen Recheneinrichtung wenigstens ein Modell erzeugt, das heißt generiert, welches zumindest die Umgebung des Kraftfahrzeugs, die Position des Kraftfahrzeugs in der Umgebung und die Position des weiteren Fahrzeugs beschreibt, das heißt insbesondere abbildet. Unter dem Modell beziehungsweise unter der Karte kann somit insbesondere eine Umfelddarstellung des Kraftfahrzeugs verstanden werden. Insbesondere bildet die Karte zumindest die Umgebung, die Position des Kraftfahrzeugs in der Umgebung und die Position des weiteren Fahrzeugs in der Umgebung ab. Unter dem Erzeugen der virtuellen Karte kann insbesondere ein Generieren der virtuellen Karte verstanden werden.

Um einen Fahrer des Kraftfahrzeugs besonders gut bei seiner Fahraufgabe, das heißt beim Steuern des Kraftfahrzeugs, unterstützen zu können, ist die elektronische Recheneinrichtung erfindungsgemäß dazu ausgebildet, in einem manuellen Fahrbetrieb des Kraftfahrzeugs wenigstens ein Steuersignal zum Anzeigen der virtuellen Karte für den Fahrer des Kraftfahrzeugs an wenigstens eine optische Anzeigeeinrichtung des Kraftfahrzeugs zu senden. Dies bedeutet, dass mittels der elektronischen Recheneinrichtung das Steuersignal zum Anzeigen der virtuellen Karte an die optische Anzeigeeinrichtung des Kraftfahrzeugs sendbar oder gesendet wird, insbesondere übermittelbar ist oder übermittelt wird, wodurch insbesondere mittels der optischen Anzeigeeinrichtung die virtuelle Karte für den Fahrer beziehungsweise den Fahrer angezeigt wird. In anderen Worten veranlasst die elektronische Recheneinrichtung die Anzeigeeinrichtung, die virtuelle Karte dem Fahrer anzuzeigen. Unter dem Steuersignal kann demnach insbesondere ein Anzeigesteuersignal verstanden werden. Das Steuersignal beschreibt beispielsweise das Anzeigen der virtuellen Karte. Unter dem Anzeigen der virtuellen Karte kann insbesondere eine optische Darstellung der virtuellen Karte verstanden werden, wobei diese optische Darstellung insbesondere von dem Fahrer des Kraftfahrzeugs sichtbar ist. Unter der optischen Anzeigeeinrichtung kann insbesondere eine optische Ausgabeeinrichtung verstanden werden. Die optische Anzeigeeinrichtung ist beispielsweise als, insbesondere fahrzeugintegrierter, Bildschirm ausgebildet, welcher auch als Display bezeichnet werden kann.

Unter dem Merkmal "in dem manuellen Fahrbetrieb" wird insbesondere verstanden, dass die elektronische Recheneinrichtung dazu ausgebildet, das Steuersignal zum Anzeigen der virtuellen Karte für den Fahrer des Kraftfahrzeugs an die optische Anzeigeeinrichtung des Kraftfahrzeugs, insbesondere ausschließlich dann, zu senden, wenn sich das Kraftfahrzeug in dem manuellen Fahrbetrieb, das heißt in einem manuellen Fahrbetriebsmodus, befindet. Unter dem manuellen Fahrbetrieb kann insbesondere ein Zustand verstanden werden, in welchem der Fahrer das Kraftfahrzeug manuell, das heißt selbst, fährt. Dies bedeutet, dass bei dem manuellen Fahrbetrieb kein autonomer beziehungsweise automatischer Fahrbetrieb vorliegt. Es kann jedoch möglich sein, dass bei dem manuellen Fahrbetrieb ein teilautomatisiertes Fahren des Kraftfahrzeugs erfolgt, beispielsweise gemäß Level 2 Automatisierungsgrad. Unter dem Level 2 Automatisierungsgrad kann insbesondere Stufe 2 gemäß SAE J3016 verstanden werden.

Beispielsweise ist es vorgesehen, dass mittels der elektronischen Recheneinrichtung der manuelle Fahrbetrieb ermittelbar ist oder ermittelt wird. Dies bedeutet, dass mittels der elektronischen Recheneinrichtung geprüft werden kann, ob sich das Fahrzeug in dem manuellen Fahrbetrieb befindet. Wird mittels der elektronischen Recheneinrichtung der manuelle Fahrbetrieb ermittelt, das heißt wenn die mittels der elektronischen Recheneinrichtung durchgeführte Prüfung ergibt, dass sich das Kraftfahrzeug in dem manuellen Fahrbetrieb befindet, wird beispielsweise das Steuersignal zum Anzeigen der virtuellen Karte für den Fahrer des Kraftfahrzeugs an die optische Anzeigeeinrichtung des Kraftfahrzeugs gesendet, wodurch insbesondere die virtuelle Karte dem Fahrer angezeigt wird.

Der Erfindung liegen insbesondere die folgenden Erkenntnisse und Überlegungen zugrunde: Durch das Erzeugen der virtuellen Karte mit der erfassten Position des Kraftfahrzeugs und mit der ermittelten Position des weiteren Fahrzeugs können durch das Anzeigen der virtuellen Karte Verkehrsteilnehmer, insbesondere dynamisch, auf Fahrkarten, insbesondere Segmenten von Fahrkarten, positioniert und verfolgt werden. Dabei kann beispielsweise nicht nur ein Ereignis, beispielsweise in Form eines Pannenfahrzeugs, und GPS-Daten an das Kraftfahrzeug weitergegeben werden, sondern die Verkehrsteilnehmer können, insbesondere dynamisch, auf den Fahrkarten beziehungsweise der zuvor genannten Karte positioniert und verfolgt werden, sodass eine jeweilige Position von den Verkehrsteilnehmern, insbesondere mit einer gewissen Höhe an Konfidenz, beispielsweise in Echtzeit, wiedergegeben werden kann. Solche Informationen, das heißt insbesondere die zuvor genannten Daten, können von mehreren Fahrzeugen, beispielsweise in unterschiedlichen Fahrtrichtungen und Fahrspuren, kommen. Die Daten beziehungsweise das Erzeugen der virtuellen Karte ermöglichen beispielsweise, insbesondere in Echtzeit, dem Kraftfahrzeug und durch das Anzeigen der virtuellen Karte auch dem Fahrer des Kraftfahrzeugs, Informationen, beispielsweise in Form von Prognosen, über eventuell entgegenkommende Fahrzeuge auf einer Gegenspur oder an einer Kreuzung zu liefern. Durch das Anzeigen der virtuellen Karte kann der Fahrer sein Fahrverhalten anpassen, sodass der Fahrer beispielsweise nicht überholt oder beispielsweise sein Fahrstrategie anpasst, um beispielsweise langsamer oder schneller zu fahren, um an einer Kreuzung nicht warten zu müssen. Ferner kann der Fahrer beispielsweise auf einen Überholvorgang auf der Gegenspur verzichten, um beispielsweise nicht zu stark bremsen zu müssen. Ferner kann der Fahrer und/oder ein Fernlichtassistent ein Fernlicht des Kraftfahrzeugs beispielsweise besonders effizient schalten, insbesondere ein- und ausschalten, wodurch das Fernlicht beispielsweise noch früher und effizienter ein- und ausgeschaltet werden kann. Demnach kann mittels des erfindungsgemäßen Fahrerassistenzsystems beispielsweise eine Sicherheit des Kraftfahrzeugs noch weiter gesteigert werden. Ferner kann ein Komfort des Kraftfahrzeugs, insbesondere für den Fahrer, besonders erhöht werden.

In weiterer Ausgestaltung ist es vorgesehen, dass die elektronische Recheneinrichtung dazu ausgebildet ist, für eine, insbesondere aktuelle oder bevorstehende, Fahrsituation des Kraftfahrzeugs, beispielsweise in Abhängigkeit von der erfassten Position des Kraftfahrzeugs und/oder in Abhängigkeit von der ermittelten Position des weiteren Fahrzeugs, wenigstens ein Gefährdungskriterium zu prüfen. Dies bedeutet, dass mittels der elektronischen Recheneinrichtung für die, insbesondere aktuelle oder bevorstehende, Fahrsituation, beispielsweise in Abhängigkeit von der erfassten Position des Kraftfahrzeugs und/oder in Abhängigkeit von der erfassten weiteren Position des Fahrzeugs, das wenigstens eine Gefährdungskriterium prüfbar ist oder geprüft wird. In anderen Worten wird mittels der elektronischen Recheneinrichtung geprüft, ob das Gefährdungskriterium erfüllt ist oder nicht erfüllt ist, das heißt ob für die Fahrsituation eine Gefährdung vorliegt oder keine Gefährdung vorliegt. Beim Erfüllen des Gefährdungskriteriums erfolgt mittels der elektronischen Recheneinrichtung das Senden des Steuersignals an die optische Anzeigeeinrichtung, wodurch insbesondere das Anzeigen der virtuellen Karte erfolgt. In anderen Worten geht mit dem Erfüllen des Gefährdungskriteriums das Senden des Steuersignals an die optische Anzeigeeinrichtung, und dadurch insbesondere das Anzeigen der virtuellen Karte, einher. Dies bedeutet, dass die elektronische Recheneinrichtung dazu ausgebildet ist, in dem manuellen Fahrbetrieb das Steuersignal zum Anzeigen der virtuellen Karte für den Fahrer des Kraftfahrzeugs an die optische Anzeigeeinrichtung des Kraftfahrzeugs zu senden, wenn das Gefährdungskriterium erfüllt ist beziehungsweise erfüllt wird. Das heißt insbesondere, wenn mittels der elektronischen Recheneinrichtung ermittelt worden ist, dass eine Gefahrensituation vorliegt. Das Gefährdungskriterium ist insbesondere ein Gefährdungskriterium für eine Kollision des Kraftfahrzeugs mit dem weiteren Fahrzeug. In anderen Worten charakterisiert das Gefährdungskriterium insbesondere die Kollision des Kraftfahrzeugs mit dem weiteren Fahrzeug. Beispielsweise ist beziehungsweise wird das Gefährdungskriterium erfüllt, wenn sich in Nähe des Kraftfahrzeugs eine Kreuzung oder ein, insbesondere langsam, vor dem Kraftfahrzeug vorausfahrendes Fahrzeug befindet und/oder wenn der Fahrer einen Überholvorgang durchführt oder durchführen will. Das langsam vorausfahrende Fahrzeug ist beispielsweise deshalb potentiell gefährlich, da der Fahrer beispielsweise dazu verleitet wird, das langsame Fahrzeug überholen zu wollen. Der Fahrer kann somit durch das Anzeigen der Karte sein Fahrverhalten entsprechend anpassen, das heißt beispielsweise nicht überholen oder entsprechend vorausschauen oder langsam an die Kreuzung heranfahren.

In weiterer Ausgestaltung ist es vorgesehen, dass die elektronische Recheneinrichtung dazu ausgebildet ist, wenigstens eine ein Fahrverhalten des Fahrers des Kraftfahrzeugs charakterisierende, beispielsweise in der elektronischen Recheneinrichtung gespeicherte, Information abzurufen, von welcher das Gefährdungskriterium, das heißt insbesondere das Erfüllen des Gefährdungskriteriums, abhängt. Dies bedeutet, dass mittels der elektronischen Recheneinrichtung die das Fahrverhalten des Fahrers des Kraftfahrzeugs charakterisierende Information abrufbar oder abgerufen wird. In anderen Worten erfolgt das Prüfen des Gefährdungskriteriums mittels der elektronischen Recheneinrichtung in Abhängigkeit von der das Fahrverhalten des Fahrers des Kraftfahrzeugs charakterisierenden Information. Unter dem Fahrverhalten kann dabei insbesondere ein vergangenes, das heißt ein bereits geschehenes, Fahrverhalten des Fahrers verstanden werden. Es können somit Gewohnheiten, insbesondere Fahrgewohnheiten, wie beispielsweise, dass der Fahrer ein Mittelspurfahrer ist, meistens Soll-Geschwindigkeit fährt, besonders hohe Geschwindigkeiten fährt, besonders niedrige Geschwindigkeiten fährt und/oder zu Überholvorgängen neigt, verwendet werden, um mittels des Gefährdungskriteriums abzuschätzen, ob der Fahrer mittels der virtuellen Karte, das heißt durch das Anzeigen der virtuellen Karte, vor der aktuellen Fahrsituation gewarnt beziehungsweise unterstützt werden sollte. Es können somit die Gewohnheiten des Fahrers, insbesondere anonymisiert, berücksichtigt werden. Dadurch kann das Erfüllen des Gefährdungskriteriums besonders präzise geprüft werden, wodurch besonders gute Voraussagen getroffen werden können.

In weiterer Ausgestaltung ist es vorgesehen, dass die, insbesondere empfangenen, Daten wenigstens eine ein Fahrverhalten eines Fahrers des weiteren Fahrzeugs charakterisierende Information umfassen, von welcher das Gefährdungskriterium, das heißt insbesondere das Erfüllen des Gefährdungskriteriums, und/oder das Ermitteln der Position des weiteren Fahrzeugs abhängt. In anderen Worten wird mittels der elektronischen Recheneinrichtung für die Fahrsituation des Kraftfahrzeugs das Gefährdungskriterium in Abhängigkeit von der das Fahrverhalten des Fahrers des weiteren Fahrzeugs charakterisierenden Information geprüft. Alternativ oder zusätzlich wird mittels der elektronischen Recheneinrichtung in Abhängigkeit von der das Fahrverhalten des Fahrers des weiteren Fahrzeugs charakterisierenden Information die Position des weiteren Fahrzeugs ermittelt. Dadurch kann das Erfüllen des Gefährdungskriteriums besonders präzise geprüft werden. Ferner kann dadurch, dass das Ermitteln der Position des weiteren Fahrzeugs von der den Fahrer des weiteren Fahrzeugs charakterisierenden Information abhängt, diese Information zum Ermitteln der Position des weiteren Fahrzeugs verwendet werden, wodurch die Position des weiteren Fahrzeugs besonders präzise vorhergesagt werden kann, und zwar insbesondere dann, wenn die Daten beispielsweise keine aktuellen Positionsdaten hinsichtlich des weiteren Fahrzeugs umfassen.

In weiterer Ausgestaltung ist es vorgesehen, dass die elektronische Recheneinrichtung dazu ausgebildet ist, in Abhängigkeit von den mittels der Empfangseinrichtung empfangenen Daten wenigstens eine Wahrscheinlichkeit zu ermitteln, insbesondere zu berechnen, dass sich das weitere Fahrzeug an einer definierten beziehungsweise vorgegebenen Position befindet, welche unterschiedlich zu der ermittelten Position des weiteren Fahrzeugs ist. Dies bedeutet, dass mittels der elektronischen Recheneinrichtung in Abhängigkeit von der mittels der Empfangseinrichtung empfangenen Daten die Wahrscheinlichkeit ermittelbar ist oder ermittelt wird, insbesondere berechenbar ist oder berechnet wird, dass sich das weitere Fahrzeug an der definierten Position befindet. Unter der Wahrscheinlichkeit kann insbesondere eine Wahrscheinlichkeit verstanden werden, ob sich das weitere Fahrzeug nicht etwa an der ermittelten, das heißt prognostizierten, Position in der Umgebung befindet, sondern an einer von der ermittelten Position unterschiedlichen, sonstigen Position, bei welcher es sich insbesondere um die zuvor genannte definierte Position handelt. Dadurch kann geprüft werden, wie wahrscheinlich es ist, dass sich das weitere Fahrzeug an einer für die Fahrsituation des Kraftfahrzeugs besonders relevanten Position in Form der definierten Position befindet, da beispielsweise in den Daten enthaltene Positionsdaten des weiteren Fahrzeugs veraltet, das heißt nicht aktuell, sein können. Es kann somit beispielsweise anhand prädiktiver Streckendaten oder Navigationsdaten, beispielsweise unter Berücksichtigung in ein Navigationssystem eingegebener Ziele, die Wahrscheinlichkeit ermittelt werden, dass sich das weitere Fahrzeug auf einer bestimmten Fahrroute befindet, auf welcher sich insbesondere die definierte Position befindet. Damit kann beispielsweise für das Kraftfahrzeug ermöglicht werden, eine Information in Form einer Prognose zur Umgebungsdarstellung zu ermöglichen, wann beispielsweise Gegenverkehr eintreffen könnte.

In weiterer Ausgestaltung ist es vorgesehen, dass die elektronische Recheneinrichtung dazu ausgebildet ist, wenigstens ein Warnungssteuersignal zum Ausgeben einer, beispielsweise haptischen, akustischen und/oder optischen, Warnung an eine Ausgabeeinrichtung des Kraftfahrzeugs zu senden, wenn die mittels der elektronischen Recheneinrichtung ermittelte Wahrscheinlichkeit höher als ein, insbesondere vorgegebener beziehungsweise vordefinierter, Schwellenwert ist. Dies bedeutet, dass mittels der elektronischen Recheneinrichtung das Warnungssteuersignal zum Ausgeben der Warnung an die Ausgabeeinrichtung des Kraftfahrzeugs sendbar ist oder gesendet wird, wenn die mittels der elektronischen Recheneinrichtung ermittelte Wahrscheinlichkeit höher als der Schwellenwert ist, wodurch insbesondere mittels der Ausgabeeinrichtung die Warnung an den Fahrer ausgebbar ist oder ausgegeben wird. In anderen Worten veranlasst die elektronische Recheneinrichtung die Ausgabeeinrichtung, die Warnung auszugeben, wenn die mittels der elektronischen Recheneinrichtung ermittelte Wahrscheinlichkeit höher als der Schwellenwert ist. Der Fahrer kann dadurch besonders gut vor einer potentiellen Gefahr gewarnt werden. Die Ausgabeeinrichtung ist beispielsweise eine von der Anzeigeeinrichtung unterschiedliche Ausgabeeinrichtung. Alternativ kann es sich bei der Ausgabeeinrichtung um die Anzeigeeinrichtung handeln.

In weiterer Ausgestaltung ist es vorgesehen, dass die elektronische Recheneinrichtung dazu ausgebildet ist, ein Objekt an der definierten Position in der virtuellen Karte zu erzeugen, wenn die mittels der elektronischen Recheneinrichtung ermittelte Wahrscheinlichkeit höher der Schwellenwert ist, wodurch bei dem Anzeigen der virtuellen Karte dem Fahrer insbesondere das Objekt an der definierten Position in der virtuellen Karte anzeigbar ist beziehungsweise angezeigt wird. Dies bedeutet, dass mittels der elektronischen Recheneinrichtung das Objekt an der definierten Position in der virtuellen Karte erzeugbar ist oder erzeugt wird, wenn die mittels der elektronischen Recheneinrichtung ermittelte Wahrscheinlichkeit höher als der Schwellenwert ist. Mit anderen Worten ausgedrückt wird mittels der elektronischen Recheneinrichtung die virtuelle Karte beziehungsweise das Modell derart erzeugt, dass sich an der definierten Position das Objekt in der virtuellen Karte beziehungsweise in dem Modell, befindet. Durch das Objekt, beispielsweise in Form eines entgegenkommenden Fahrzeugs, kann der Fahrer in der virtuellen Karte besonders gut vor einer potentiellen Gefahr gewarnt werden. Dabei kann für den Fahrer die Position des Objekts beziehungsweise der Gefahr durch die Darstellung mittels der virtuellen Karte besonders gut veranschaulicht werden.

In weiterer Ausgestaltung ist es vorgesehen, dass das Fahrerassistenzsystem wenigstens eine Umgebungserfassungseinrichtung zum Erfassen der Umgebung, insbesondere zum Erfassen des weiteren Fahrzeugs in der Umgebung, aufweist. Dies bedeutet, dass mittels der Umgebungserfassungseinrichtung die Umgebung des Kraftfahrzeugs, insbesondere das sich in der Umgebung befindende, weitere Fahrzeug, erfassbar ist oder erfasst wird. Unter dem Erfassen kann insbesondere ein Detektieren verstanden werden. Die Umgebungserfassungseinrichtung ist beispielsweise als optische Umgebungserfassungseinrichtung, insbesondere als Kamera, ausgebildet. Alternativ oder zusätzlich ist die Umgebungserfassungseinrichtung beispielsweise als Lidarsensor oder als Radarsensor ausgebildet.

Vorzugsweise ist es vorgesehen, dass die elektronische Recheneinrichtung dazu ausgebildet ist, beim Erfassen des weiteren Fahrzeugs in der Umgebung mittels der Umgebungserfassungseinrichtung, das heißt wenn mittels der Umgebungserfassungseinrichtung das weitere Fahrzeug in der Umgebung erfasst wird beziehungsweise erfasst worden ist, die ermittelte Position in Abhängigkeit von dem mittels der Umgebungserfassungseinrichtung erfassten weiteren Fahrzeug zu korrigieren, das heißt insbesondere anzupassen. Dies bedeutet, dass mittels der elektronischen Recheneinrichtung beim Erfassen des weiteren Fahrzeugs in der Umgebung mittels der Umgebungserfassungseinrichtung die ermittelte Position des weiteren Fahrzeugs in Abhängigkeit von dem mittels der Umgebungserfassungseinrichtung erfassten weiteren Fahrzeug korrigierbar ist oder korrigiert wird, das heißt insbesondere anpassbar ist oder angepasst wird. Durch das Korrigieren kann die, insbesondere zuvor, ermittelte Position des weiteren Fahrzeugs aktualisiert werden. Dabei wird beispielsweise mittels der elektronischen Recheneinrichtung in Abhängigkeit von dem mittels der Umgebungserfassungseinrichtung erfassten weiteren Fahrzeug die ermittelte Position des Fahrzeugs erneut ermittelt und dadurch insbesondere aktualisiert. Dadurch kann die Position des weiteren Fahrzeugs besonders präzise ermittelt werden, wodurch besonders präzise Prognosen, das heißt insbesondere besonders präzise Positionsdarstellungen des weiteren Fahrzeugs in der virtuellen Karte, ermöglicht werden können.

In zweiter Aspekt der Erfindung betrifft ein Kraftfahrzeug, welche wenigstens ein Fahrerassistenzsystem gemäß dem ersten Aspekt der Erfindung aufweist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Ein dritter Aspekt der Erfindung betrifft ein Verfahren zum Betreiben eines Kraftfahrzeugs, insbesondere gemäß dem zweiten Aspekt der Erfindung. Beispielsweise weist das Kraftfahrzeug ein Fahrerassistenzsystem gemäß dem ersten Aspekt der Erfindung auf. Unter dem Verfahren kann insbesondere ein Verfahren zum Betreiben eines Fahrerassistenzsystems gemäß dem ersten Aspekt der Erfindung verstanden werden. Insbesondere ist das Kraftfahrzeug und/oder das Fahrerassistenzsystem zum Durchführen des Verfahrens ausgebildet. Vorteile und vorteilhafte Ausgestaltungen des ersten und des zweiten Aspekts der Erfindung sind als Vorteile und vorteilhafte Ausgestaltungen des dritten Aspekts der Erfindung anzusehen und umgekehrt.

Bei dem Verfahren wird mittels einer Positionserfassungseinrichtung des Kraftfahrzeugs, beispielsweise des Fahrerassistenzsystems, eine, insbesondere aktuelle, Position des Kraftfahrzeugs erfasst. Mittels wenigstens einer Empfangseinrichtung des Kraftfahrzeugs, insbesondere des Fahrerassistenzsystems, werden wenigstens ein weiteres Fahrzeug charakterisierenden Daten empfangen, welche zumindest eine Position des weiteren Fahrzeugs beschreiben beziehungsweise charakterisieren. Ferner wird mittels einer elektronischen Recheneinrichtung des Kraftfahrzeugs, insbesondere des Fahrerassistenzsystems, in Abhängigkeit von den mittels der Empfangseinrichtung empfangenen Daten die Position des weiteren Fahrzeugs ermittelt wird. Zudem wird mittels der elektronischen Recheneinrichtung in Abhängigkeit von der erfassten Position des Kraftfahrzeugs und in Abhängigkeit von den empfangenen Daten wenigstens eine eine Umgebung des Kraftfahrzeugs charakterisierende, virtuelle Karte, insbesondere Straßenkarte, mit der erfassten Position des Kraftfahrzeugs und mit der ermittelten Position des weiteren Fahrzeugs, insbesondere automatisch, erzeugt.

Um den Fahrer bei seiner Fahraufgabe besonders gut unterstützen zu können, wird erfindungsgemäß, insbesondere ausschließlich, in einem manuellen Fahrbetrieb des Kraftfahrzeugs mittels der elektronischen Recheneinrichtung wenigstens ein Steuersignal zum Anzeigen der virtuellen Karte für den Fahrer des Kraftfahrzeugs an wenigstens eine optische Anzeigeeinrichtung des Kraftfahrzeugs gesendet, wodurch mittels der optischen Anzeigeeinrichtung insbesondere die virtuelle Karte für den Fahrer beziehungsweise dem Fahrer angezeigt wird. Das Anzeigen ist demnach insbesondere ein optisches Anzeigen.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Zu der Erfindung gehört auch eine Steuervorrichtung für das Kraftfahrzeug. Bei der Steuervorrichtung handelt es sich beispielsweise um die elektronische Recheneinrichtung. Die Steuervorrichtung kann eine Datenverarbeitungsvorrichtung oder eine Prozessoreinrichtung (Prozessorschaltung) aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Als Mikroprozessor kann insbesondere jeweils eine CPU (Central Processing Unit), eine GPU (Graphical Processing Unit) oder eine NPU (Neural Processing Unit) verwendet werden. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein. Die Prozessoreinrichtung kann z.B. auf zumindest einer Schaltungsplatine und/oder auf zumindest einem SoC (System on Chip) basieren.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs und/oder des erfindungsgemäßen Fahrerassistenzsystems beschrieben worden sind. Aus diesem Grund sind die entsprechenden Weiterbildungen des erfindungsgemäßen Verfahrens hier nicht noch einmal beschrieben.

Als eine weitere Lösung umfasst die Erfindung auch ein computerlesbares Speichermedium, umfassend Programmcode, der bei der Ausführung durch einen Computer oder einen Computerverbund diesen veranlasst, eine Ausführungsform des erfindungsgemäßen Verfahrens auszuführen. Das Speichermedium kann zumindest teilweise als ein nicht-flüchtiger Datenspeicher (z.B. als eine Flash-Speicher und/oder als SSD - solid state drive) und/oder zumindest teilweise als ein flüchtiger Datenspeicher (z.B. als ein RAM - random access memory) bereitgestellt sein. Das Speichermedium kann in dem Computer oder Computerverbund angeordnet sein. Das Speichermedium kann aber auch beispielsweise als sogenannter Appstore-Server und/oder Cloud-Server im Internet betrieben sein. Durch den Computer oder Computerverbund kann eine Prozessorschaltung mit beispielsweise zumindest einem Mikroprozessor bereitgestellt sein. Der Programmcode kann als Binärcode und/oder als Assembler-Code und/oder als Quellcode einer Programmiersprache (z.B. C) und/oder als Programmskript (z.B. Python) bereitgestellt sein. Das computerlesbare Speichermedium kann alternativ durch ein Signal mit computerlesbaren Daten realisiert sein, z.B. ein zeitvariantes Spannungssignal und/oder ein Funksignal.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: eine schematische Draufsicht eines erfindungsgemäßen Kraftfahrzeugs zum Veranschaulichen einer ersten Verkehrssituation; und
- Fig. 2: eine schematische Darstellung eines erfindungsgemäßen Fahrerassistenzsystems;
- Fig. 3: eine schematische Darstellung einer virtuellen Karte, welche die erste Verkehrssituation abbildet;
- Fig. 4: eine schematische Draufsicht eines erfindungsgemäßen Kraftfahrzeugs zum Veranschaulichen einer zweiten Verkehrssituation;
- Fig. 5: eine schematische Darstellung einer virtuellen Karte, welche die zweite Verkehrssituation abbildet;
- Fig. 6: eine schematische Draufsicht eines Kraftfahrzeugs zum Veranschaulichen einer dritten Verkehrssituation; und
- Fig. 7: eine schematische Darstellung einer virtuellen Karte, welche die dritte Verkehrssituation abbildet.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

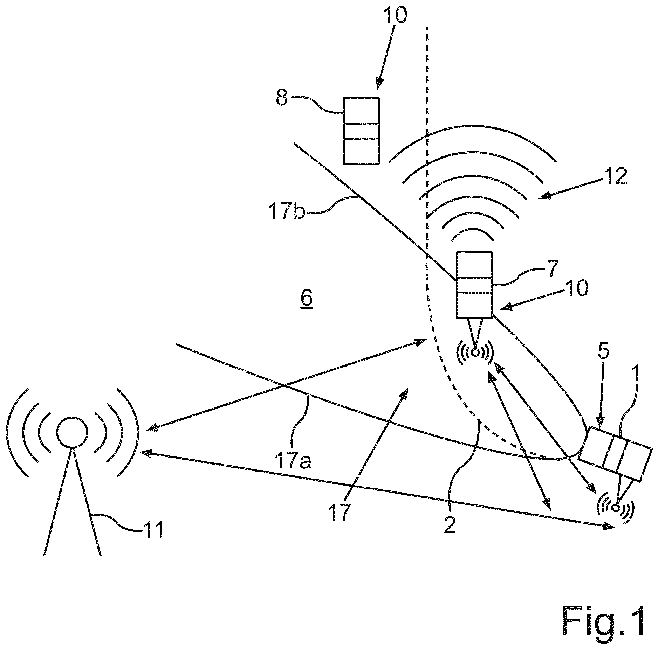

Fig. 1 zeigt in einer schematischen Draufsicht ein Kraftfahrzeug 1, welches sich vorliegend auf einer Fahrbahn 2 befindet, das heißt insbesondere auf der Fahrbahn 2 fährt. Das Kraftfahrzeug 1 kann als Egofahrzeug bezeichnet werden. Die Fahrbahn 2, welche insbesondere durch eine Straße gebildet ist, ist in Fig. 1 lediglich besonders schematisch durch gestrichelte Linien veranschaulicht. In Fig. 1 ist insbesondere eine erste Verkehrssituation veranschaulicht.

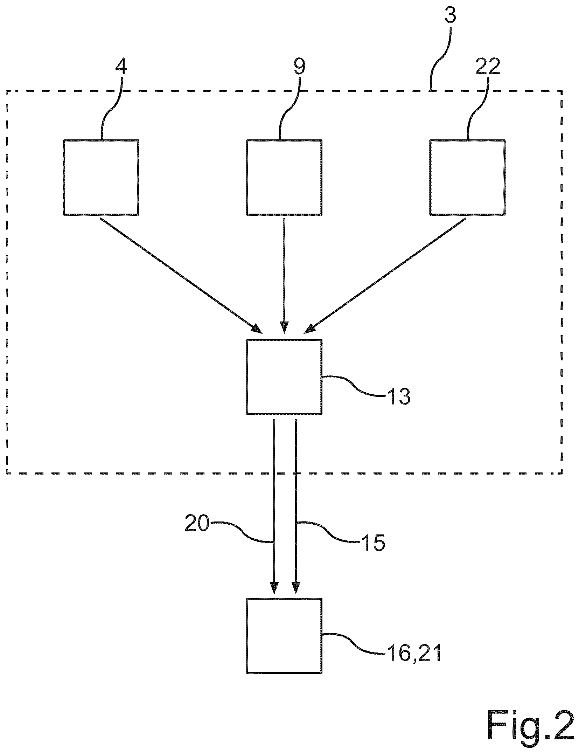

Das Kraftfahrzeug 1 weist ein Fahrerassistenzsystem 3 auf, welches in Fig. 2 in einer besonders schematischen Darstellung veranschaulicht ist. Das Fahrerassistenzsystem 3 weist wenigstens eine Positionserfassungseinrichtung 4 zum Erfassen einer, insbesondere aktuellen Position des Kraftfahrzeugs 1, insbesondere in einer Umgebung 6 des Kraftfahrzeugs 1, auf. Das Erfassen der Position mittels der Positionserfassungseinrichtung 4 basiert beispielsweise auf GPS.

Wie in Fig. 1 veranschaulicht, befindet sich in der Umgebung 6 vorliegend wenigstens ein weiteres Fahrzeug, wobei sich in dem in Fig. 1 gezeigten Ausführungsbeispiel zwei weitere Fahrzeuge 7, 8 in der Umgebung 6 befinden. Das weitere Fahrzeug 7 kann als erstes weitere Fahrzeug 7 bezeichnet werden. Das weitere Fahrzeug 8 kann als zweites weiteres Fahrzeug 8 bezeichnet werden. Das Fahrerassistenzsystem 3 weist wenigstens eine, insbesondere von der Positionserfassungseinrichtung 4 unterschiedliche, Empfangseinrichtung 9 zum Empfangen von Daten auf, welche das erste weitere Fahrzeug 7 und/oder das zweite weitere Fahrzeug 8 charakterisieren. Somit charakterisieren die Daten beispielsweise das jeweilige weitere Fahrzeug 7, 8. Wenn im Folgenden von dem "jeweiligen weiteren Fahrzeug 7, 8" die Rede ist, kann sich dies auf das erste weitere Fahrzeug 7 und/oder auf das zweite weitere Fahrzeug 8 beziehen.

Die Daten beschreiben zumindest eine, insbesondere aktuelle oder vergangene, Position 10 des jeweiligen weiteren Fahrzeugs 7, 8, das heißt beispielsweise des ersten und/oder des zweiten weiteren Fahrzeugs 7, 8. Die Daten können direkt von dem jeweiligen weiteren Fahrzeug 7, 8, das heißt beispielsweise von dem jeweiligen ersten und/oder von dem jeweiligen zweiten Fahrzeug 7, 8 an die Empfangseinrichtung 9 des Kraftfahrzeugs 1 gesendet werden. Alternativ können die Daten des jeweiligen weiteren Fahrzeugs 7, 8, das heißt beispielsweise die Daten des jeweiligen ersten und/oder des jeweiligen weiteren Fahrzeugs 7, 8 an eine fahrzeugexterne Kommunikationseinrichtung 11 gesendet werden, von welcher die Daten an die Empfangseinrichtung 9 des Kraftfahrzeugs 1 gesendet werden können, wodurch die Empfangseinrichtung 9 des Kraftfahrzeugs 1 insbesondere die gesendeten Daten empfangen kann. In dem in Fig. 1 gezeigten Ausführungsbeispiel wird mittels wenigstens einer Sensoreinrichtung des ersten weiteren Fahrzeugs 7 das zweite weitere Fahrzeug 8 erfasst, wodurch von dem ersten weiteren Fahrzeug 7 beispielsweise die das zweite weitere Fahrzeug 8 charakterisierenden Daten gebildet beziehungsweise erzeugt werden können. Ein Erfassungsbereich 12 der Sensoreinrichtung des ersten weiteren Fahrzeugs 7 ist in Fig. 1 veranschaulicht. Diese Daten können dann von dem ersten weiteren Fahrzeug 7, beispielsweise direkt oder über die Kommunikationseinrichtung 11, an das Kraftfahrzeug 1, insbesondere an dessen Empfangseinrichtung 9, gesendet werden.

Das Kraftfahrzeug 1, insbesondere das Fahrerassistenzsystem 3, weist ferner wenigstens eine elektronische Recheneinrichtung 13 auf, welche dazu ausgebildet ist, in Abhängigkeit von den mittels der Empfangseinrichtung 9 empfangenen Daten die Position 10 beziehungsweise die jeweilige Position 10, das heißt insbesondere die Position 10 des ersten weiteren Fahrzeugs 7 und/oder die Position 10 des zweiten weiteren Fahrzeugs 8, zu ermitteln. Es kann dadurch ermittelt werden, wo sich das erste und/oder zweite weitere Fahrzeug 7, 8 in der Umgebung 6 relativ zu dem Kraftfahrzeug 1 befindet.

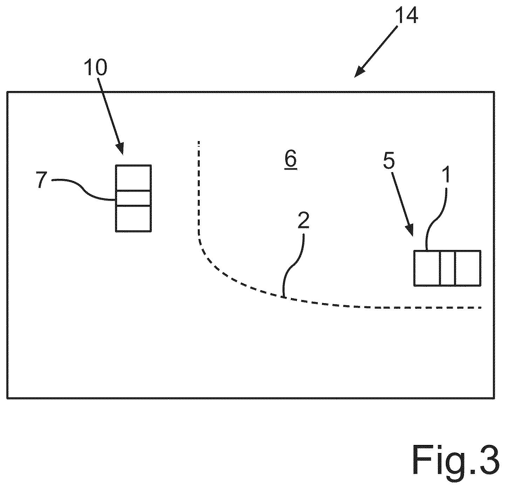

Ferner ist die elektronische Recheneinrichtung 13 dazu ausgebildet, in Abhängigkeit von der erfassten Position 5 des Kraftfahrzeugs 1 und in Abhängigkeit von den empfangenen Daten, das heißt insbesondere in Abhängigkeit von den das erste und/oder das zweite weitere Fahrzeug 7, 8 charakterisierenden Daten, eine virtuelle Karte 14, welche die Umgebung 6 charakterisiert, mit der erfassten Position 5 des Kraftfahrzeugs 1 und mit der ermittelten Position 10 beziehungsweise der jeweiligen ermittelten Position 10, das heißt insbesondere mit der ermittelten Position 10 des ersten und/oder des zweiten weiteren Fahrzeugs 7, 8, zu erzeugen. Die virtuelle Karte 14 charakterisiert demnach insbesondere die Position 10 beziehungsweise die jeweilige Position 10. Vorzugsweise charakterisiert die virtuelle Karte 14 die Fahrbahn 2, auf welcher das Kraftfahrzeug 1 insbesondere fährt. Die erzeugte virtuelle Karte 14 bildet insbesondere die Position 5 des Kraftfahrzeugs 1 und die Position 10 beziehungsweise die jeweilige Position 10 des jeweiligen weiteren Fahrzeugs 7, 8 in der Umgebung 6, und insbesondere die Fahrbahn 2, ab. Die virtuelle Karte 14 ist in Fig. 3 exemplarisch für die erste Verkehrssituation abgebildet. Dabei ist in dem in Fig. 3 gezeigten Ausführungsbeispiel lediglich das zweite weitere Fahrzeug 8 in der virtuellen Karte 14 gezeigt und nicht das erste weitere Fahrzeug 7. Beispielsweise wird in der virtuellen Karte 14 die Position 5 des Kraftfahrzeugs 1 durch ein, insbesondere kraftfahrzeugähnliches, Objekt dargestellt, welches als erstes Objekt bezeichnet werden kann.

Beispielsweise wird die Position 10 beziehungsweise die jeweilige Position des jeweiligen weiteren Fahrzeugs 7, 8 in der erzeugten virtuellen Karte 14 durch wenigstens ein weiteres Objekt beziehungsweise wenigstens ein weiteres jeweiliges Objekt dargestellt, welches insbesondere fahrzeugähnlich ist.

Um den Fahrer des Kraftfahrzeugs 1 besonders gut bei seiner Fahraufgabe, das heißt beispielsweise bei einer vorliegenden Verkehrssituation, unterstützen zu können, ist die elektronische Recheneinrichtung 13 dazu ausgebildet, in einem manuellen Fahrbetrieb des Kraftfahrzeugs 1, das heißt insbesondere ausschließlich in dem manuellen Fahrbetrieb, wenigstens ein Steuersignal 15 zum Anzeigen der virtuellen Karte 14 für den Fahrer des Kraftfahrzeugs 1 an wenigstens eine, insbesondere separat von der elektronischen Recheneinrichtung 13 ausgebildete, optische Anzeigeeinrichtung 16 des Kraftfahrzeugs 1 zu senden, wodurch insbesondere mittels der optischen Anzeigeeinrichtung 16 die virtuelle Karte 14 dem Fahrer, insbesondere optisch, beispielsweise zweidimensional oder dreidimensional, angezeigt wird. Dadurch kann dem Fahrer ein besonders guter Überblick über die Umgebung 6, das heißt insbesondere über die vorliegende Verkehrssituation, ermöglicht werden. Bei der virtuellen Karte 14 handelt es sich somit insbesondere um eine auf den zuvor genannten Daten basierende Darstellung. In Fig. 1 ist ein Sichtfeld 17 des Fahrers des Kraftfahrzeugs 1 gezeigt. Das Sichtfeld 17 ist dabei insbesondere durch zwei Linien 17a, 17b begrenzt beziehungsweise veranschaulicht. Das Sichtfeld 17 ist beispielsweise als Sichtkegel ausgebildet. Aufgrund einer Kurve der Fahrbahn 2 befinden sich beispielsweise das erste und/oder das zweite weitere Fahrzeug 7, 8 außerhalb des Sichtfelds 17, da sich das jeweilige weitere Fahrzeug 7, 8 insbesondere aus Sicht des Fahrers hinter der Kurve befindet. Durch das Anzeigen der virtuellen Karte 14, in welcher insbesondere die Position 10 des ersten weiteren Fahrzeugs 7 und/oder die Position 10 des zweiten weiteren Fahrzeugs 8, insbesondere in der Umgebung 6, vorzugsweise in Relation zu dem Kraftfahrzeug 1, dargestellt beziehungsweise veranschaulicht ist, kann der Fahrer vorgewarnt werden, dass sich hinter der Kurve das erste und/oder das zweite weitere Fahrzeug 7, 8 befindet.

Somit können beispielsweise Fahrzeuge einer kompatiblen Flotte, das heißt vorliegend beispielsweise das Kraftfahrzeug 1, das erste weitere Fahrzeug 7 und/oder zweite weitere Fahrzeug 8, Daten über eine vorliegende Fahrstrecke und/oder andere Verkehrsteilnehmer erfassen. Dies erfolgt beispielsweise außerhalb von Sensoren, wie beispielsweise Kameras, Radar, Lidar und/oder dergleichen. Die Daten können konsolidiert und/oder an Fahrzeuge, wie beispielsweise das Kraftfahrzeug 1, die selbst beispielsweise nicht entsprechend Informationen erfassen können, mitgeteilt werden, sodass eine entsprechende Umfeldvisualisierung des Kraftfahrzeugs 1 ermöglicht werden kann.

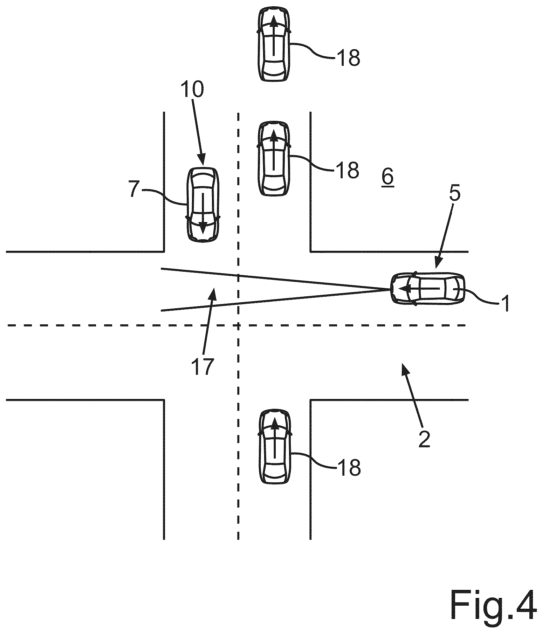

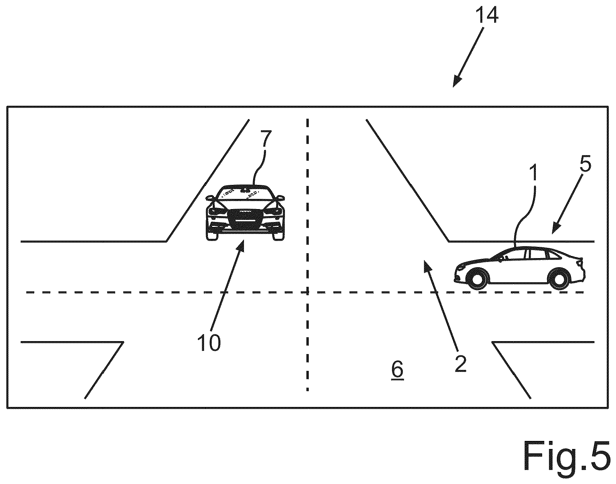

In Fig. 4 ist ebenfalls das Kraftfahrzeug 1 in einer schematischen Draufsicht gezeigt, wobei in Fig. 4 dabei eine von der ersten Verkehrssituation unterschiedliche, zweite Verkehrssituation veranschaulicht ist. In dieser Verkehrssituation nähert sich das Kraftfahrzeug 1 einer Kreuzung. In Fig. 4 befindet sich in der Umgebung 6 exemplarisch das erste weitere Fahrzeug 7, welches sich vorliegend außerhalb des Sichtfelds 17 des Fahrers befindet. Dabei befindet sich das erste weitere Fahrzeug 7 beispielsweise auf einer Straße, welche die Fahrbahn 2 des Kraftfahrzeugs 1 an der Kreuzung kreuzt. Ferner sind in Fig. 4 exemplarisch zusätzliche Fahrzeuge 18 dargestellt. In Fig. 5 ist exemplarisch die erzeugte virtuelle Karte 14 für die zweite Verkehrssituation, das heißt für die in Fig. 4 gezeigte Verkehrssituation, gezeigt. Wie in Fig. 5 zu erkennen, ist dabei in der virtuellen Karte 14 die Position 10 des ersten weiteren Fahrzeugs 7 veranschaulicht beziehungsweise dargestellt, wodurch der Fahrer mittels der virtuellen Karte 14 beziehungsweise durch dessen Anzeigen vor dem ersten weiteren Fahrzeug 7, welches sich vorliegend auf der kreuzenden Straße befindet, gewarnt werden kann.

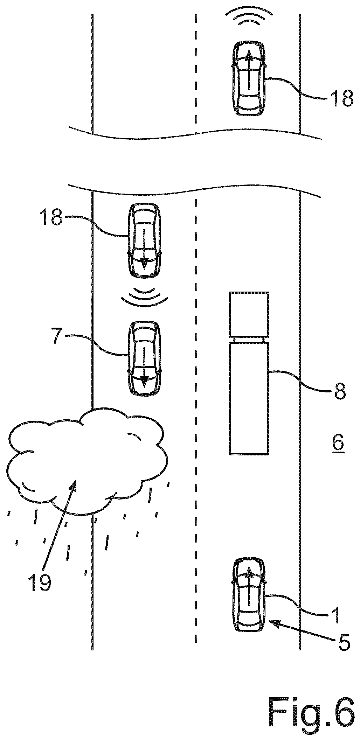

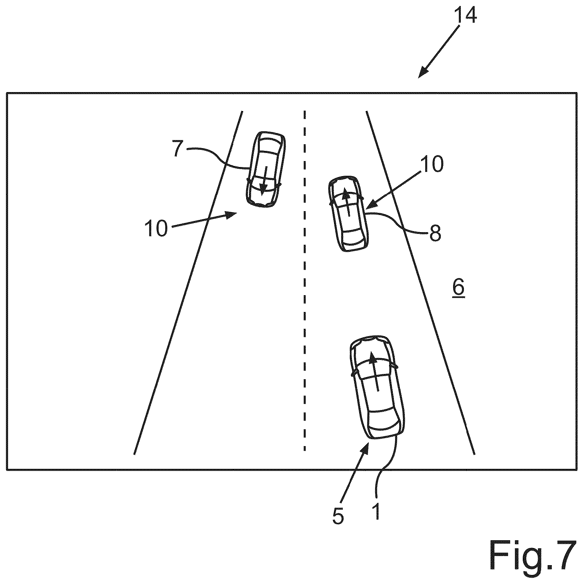

In Fig. 6 ist das Kraftfahrzeug 1 ebenfalls in einer schematischen Draufsicht gezeigt, wobei in Fig. 6 eine von der ersten und der zweiten Verkehrssituation unterschiedliche, dritte Verkehrssituation gezeigt ist. Bei dieser Verkehrssituation befindet sich das Kraftfahrzeug 1 auf einer Fahrbahn 2, welche vorliegend gerade verläuft. Die Fahrbahn 2 ist somit als gerade Strecke ausgebildet. Infolge von, insbesondere schlechten, Witterungsverhältnissen 19, wie beispielsweise Nebel, Regen, Schnee oder dergleichen, ist beispielsweise eine Sicht des Fahrers des Kraftfahrzeugs 1 eingeschränkt beziehungsweise erschwert. In Fig. 6 sind exemplarisch das erste weitere Fahrzeug 7 und das zweite weitere Fahrzeug 8 dargestellt. Das erste weitere Fahrzeug 7 befindet sich vorliegend bezogen auf das Kraftfahrzeug 1 auf einer Gegenfahrbahn, wodurch es sich bei dem ersten weiteren Fahrzeug 7 vorliegend für den Fahrer des Kraftfahrzeugs 1 um Gegenverkehr handelt. Das zweite weitere Fahrzeug 8 ist in dem in Fig. 6 gezeigten Ausführungsbeispiel als Lastkraftwagen (LKW) ausgebildet, welcher auf derselben Fahrbahn beziehungsweise Fahrspur fährt wie das Kraftfahrzeug 1. In Fig. 7 ist die erzeugte virtuelle Karte 14 für die in Fig. 6 veranschaulichte dritte Verkehrssituation gezeigt. Durch die Darstellung des ersten weiteren Fahrzeugs 7 beziehungsweise dessen Position 10 in der erzeugten virtuellen Karte 14 kann der Fahrer vor dem entgegenkommenden ersten weiteren Fahrzeug 7 gewarnt werden, sodass der Fahrer beispielsweise das zweite weitere Fahrzeug 8 nicht überholt.

Beispielsweise ist die elektronische Recheneinrichtung 13 dazu ausgebildet, für eine, insbesondere aktuelle oder bevorstehende, Verkehrssituation, das heißt beispielsweise die erste, die zweite oder die dritte Verkehrssituation, des Kraftfahrzeugs 1 wenigstens ein Gefährdungskriterium, insbesondere automatisch, zu prüfen. Dieses Prüfen erfolgt insbesondere in Abhängigkeit von der erzeugten virtuellen Karte 14, das heißt beispielsweise in Abhängigkeit von einem mittels der elektronischen Recheneinrichtung 13 erzeugten Modell, auf welchem insbesondere die erzeugte virtuellen Karte 14 basiert. Beispielsweise erfolgt mittels der elektronischen Recheneinrichtung 13, insbesondere ausschließlich, beim Erfüllen des Gefährdungskriteriums das Senden des Steuersignals 15 an die Anzeigeeinrichtung 16, wodurch insbesondere ausschließlich beim Erfüllen des Gefährdungskriteriums das Anzeigen der virtuellen Karte 14 durchgeführt wird. Vorzugsweise unterbleibt beim Nichterfüllen des Gefährdungskriteriums das Senden des Steuersignals 15 an die Anzeigeeinrichtung 16, wodurch insbesondere das Anzeigen der virtuellen Karte 14 mittels der Anzeigeeinrichtung 16 unterbleibt. Das Gefährdungskriterium ist beispielsweise dann erfüllt, wenn wenigstens eine ein Gefährdungsrisiko einer aktuellen Verkehrssituation und/oder Fahrsituation charakterisierende Größe größer als ein Gefährdungsschwellenwert ist. Beispielsweise beschreibt die Größe eine Unfallwahrscheinlichkeit. Das Gefährdungskriterium ist beispielsweise dann erfüllt, wenn sich das Kraftfahrzeug 1 in einer potentiellen gefährlichen Situation, beispielsweise vor der Kurve, vor der Kreuzung und/oder vor einem anstehenden Überholvorgang befindet und/oder wenn schlechte Witterungsverhältnisse 19 vorliegen.

Wie in Fig. 1 sowie in Fig. 3 bis 7 veranschaulicht, können somit beispielsweise zumindest folgende Verkehrssituationen verbessert werden:
- Überholen auf einer Landstraße, insbesondere wenn die Sicht des Fahrers nicht optimal ist, und/oder
- Überholen auf einer Autobahn, ohne eine Ausfahrt zu verpassen, wenn beispielsweise viele LKWs vor dem Kraftfahrzeug 1 sind; und/oder
- ein Zufahren des Kraftfahrzeugs 1 auf die Kreuzung, insbesondere wenn die Sicht des Fahrers nicht gut ist.

Ferner kann durch die virtuelle Karte 14 dem Fahrer beispielsweise eine exakte Position einer Spurverengung der Fahrbahn 2, beispielsweise aufgrund einer Baustelle oder aufgrund eines Unfalls, mitgeteilt werden. Ferner kann durch das Anzeigen der erzeugten virtuellen Karte 14 das Verwenden einer Fernlichtfunktion des Kraftfahrzeugs 1 besonders vereinfacht werden, da der Fahrer beispielsweise das Fernlicht so lange aktiviert lassen kann, bis er auf der virtuellen Karte 14 ein entgegenkommendes Fahrzeug erkennt. Eine Belichtung mit dem Fernlicht kann insbesondere so lange erfolgen, bis beispielsweise kein weiteres Fahrzeug erkannt oder gescannt wurde.

Beispielsweise ist die elektronische Recheneinrichtung 13 dazu ausgebildet, wenigstens eine ein Fahrverhalten des Fahrers des Kraftfahrzeugs 1 charakterisierende Information abzurufen, von welcher das Gefährdungskriterium abhängt. Hierfür ist es beispielsweise vorgesehen, dass die das Fahrverhalten charakterisierende Information mittels der elektronischen Recheneinrichtung 13, beispielsweise in einem Speicher der elektronischen Recheneinrichtung 13, gespeichert wird. Anschließend kann die gespeicherte Information von der elektronischen Recheneinrichtung 13 abgerufen werden, das heißt beispielsweise aus dem Speicher geladen werden. Nach dem Abrufen der Information kann die Information für das Gefährdungskriterium, das heißt insbesondere für ein Prüfen, ob das Gefährdungskriterium erfüllt ist, verwendet werden. Dadurch können Gewohnheiten des Fahrers zum Prüfen des Gefährdungskriteriums berücksichtigt werden.

Alternativ oder zusätzlich ist es beispielsweise vorgesehen, dass die empfangenen Daten wenigstens eine ein Fahrverhalten eines Fahrers zumindest eines der weiteren Fahrzeuge 7, 8 charakterisierende Information beziehungsweise jeweilige Information umfassen, von welcher das Gefährdungskriterium und/oder das Ermitteln der Position 10 beziehungsweise der jeweiligen Position 10 des jeweiligen weiteren Fahrzeugs 7, 8 abhängt. Es können somit Gewohnheiten der Fahrer der anderen Fahrzeuge 7, 8 berücksichtigt werden.

So ist beispielsweise vorgesehen, dass wenn die Information umfasst, dass der Fahrer des Kraftfahrzeugs 1 nicht zu Überholvorgängen und insbesondere nicht zu Überholvorgängen von Lastkraftwagen neigt, beim Vorliegen des anstehenden Überholvorgangs, insbesondere des Lastkraftwagens, das Gefährdungskriterium beispielsweise nicht erfüllt wird. Die virtuelle Karte 14 als Warnung vor dem anstehenden Überholvorgang braucht demnach dem Fahrer des Kraftfahrzeugs 1 beispielsweise nicht angezeigt zu werden, da er beispielsweise nie Lastkraftwagen überholt.

In weiterer Ausgestaltung ist es vorgesehen, dass die elektronische Recheneinrichtung 13 dazu ausgebildet, in Abhängigkeit von den mittels der Empfangseinrichtung 9 empfangenen Daten wenigstens eine Wahrscheinlichkeit zu ermitteln, dass sich das weitere Fahrzeug 7, 8 beziehungsweise das jeweilige weitere Fahrzeug 7, 8, das heißt beispielsweise das erste weitere Fahrzeug 7 und/oder das zweite weitere Fahrzeug 8, an einer, insbesondere jeweiligen, definierten Position befindet, welche vorliegend unterschiedlich zu der ermittelten Position 10 beziehungsweise der jeweiligen ermittelten Position 10, das heißt beispielsweise der ermittelten Position 10 des ersten weiteren Fahrzeugs 7 und/oder zu der ermittelten Position 10 des zweiten weiteren Fahrzeug 8, ist. Diese Wahrscheinlichkeit beschreibt somit insbesondere, wie wahrscheinlich es ist, dass sich das erste und/oder zweite weitere Fahrzeug 7, 8 nicht etwa an der ermittelten jeweiligen Position befindet, sondern an der, insbesondere der jeweiligen, definierten Position. Ferner ist es vorliegend vorgesehen, dass die elektronische Recheneinrichtung 13 dazu ausgebildet ist, ein, insbesondere fahrzeugähnliches, Objekt an der definierten Position in der virtuellen Karte 14 erzeugen, wenn die mittels der elektronischen Recheneinrichtung 13 ermittelte Wahrscheinlichkeit höher als ein Schwellenwert ist. Dem Fahrer des Kraftfahrzeugs 1 kann dadurch mittels der virtuellen Karte 14 signalisiert werden, dass sich an der definierten Position möglicherweise ein Fahrzeug, das heißt beispielsweise das erste weitere Fahrzeug 7 und/oder das zweite weitere Fahrzeug 8, befinden könnte, wodurch beispielsweise Ungenauigkeiten bei der Ermittlung der Position 10 berücksichtigt werden können. Diese Ungenauigkeiten können beispielsweise daraus resultieren, dass die Daten Empfangszeitpunkt bereits veraltet sein können. Das zuvor genannte Objekt charakterisiert somit insbesondere ein Hindernis, beispielsweise Fahrzeug, welches möglicherweise an der definierten Position 5 sein könnte, und zwar insbesondere mit der zuvor genannten Wahrscheinlichkeit. Dieses Fahrzeug kann deshalb auch als Phantomfahrzeug bezeichnet werden.

Alternativ oder zusätzlich ist beispielsweise vorgesehen, dass die elektronische Recheneinrichtung 13 dazu ausgebildet ist, wenigstens ein Warnungssteuersignal 20 zum Ausgeben einer Warnung an eine Ausgabeeinrichtung 21 des Kraftfahrzeugs 1 zu senden, wenn die mittels der elektronischen Recheneinrichtung 13 ermittelte Wahrscheinlichkeit höher als der Schwellenwert ist. Bei dieser Ausgabeeinrichtung 21 handelt es sich in dem Ausführungsbeispiel um die Anzeigeeinrichtung 16, welche insbesondere als Display ausgebildet ist. Die Warnung wird somit beispielsweise, insbesondere optisch, in der virtuellen Karte 14 dargestellt.

Beispielsweise weist das Kraftfahrzeug 1, insbesondere das Fahrerassistenzsystem 3, wenigstens eine Umgebungserfassungseinrichtung 22 zum Erfassen der Umgebung 6, insbesondere zum Erfassen wenigstens eines der sich in der Umgebung 6 befindenden weiteren Fahrzeuge 7, 8 auf. Dabei ist die elektronische Recheneinrichtung 13 beispielsweise dazu ausgebildet, beim Erfassen des zumindest einen der weiteren Fahrzeuge 7, 8 in der Umgebung 6 mittels der Umgebungserfassungseinrichtung 22 die ermittelte Position 10 beziehungsweise die jeweilige ermittelte Position 10, das heißt beispielsweise die ermittelte Position 10 des ersten weiteren Fahrzeugs 7 und/oder die ermittelte Position 10 des zweiten weiteren Fahrzeugs 8, in Abhängigkeit von der mittels der Umgebungserfassungseinrichtung 22 erfassten Umgebung, das heißt insbesondere in Abhängigkeit von dem mittels der Umgebungserfassungseinrichtung 22 erfassten ersten weiteren Fahrzeug 7 und/oder von dem mittels der Umgebungserfassungseinrichtung 22 erfassten zweiten weiteren Fahrzeug 8, zu korrigieren, das heißt insbesondere anzupassen. Somit kann werden eine Anpassung des Phantomfahrzeugs erfolgen, wenn dieses von der Umgebungserfassungseinrichtung 22 erfasst worden ist. Alternativ oder zusätzlich kann das Korrigieren zu einer Validierung der ermittelten Position 10 beziehungsweise der jeweiligen ermittelten Position 10 verwendet werden.

Die Umgebungserfassungseinrichtung 22 umfasst beispielsweise wenigstens eine Kamera, wenigstens einen Ultraschallsensor, wenigstens einen Lidarsensor und/oder wenigstens einen Radarsensor. Das Erfassen der Umgebung 6 kann somit beispielsweise auf Kameraerfassung, Ultraschallerfassung, Radarerfassung und/oder Lidarerfassung basieren.

Beispielsweise können Fahrereignisse, insbesondere der jeweiligen Verkehrssituation, von Sensoren erfasst werden. Bei diesen Sensoren kann es sich um Sensoren des Kraftfahrzeugs 1 und/oder um Sensoren des ersten weiteren Fahrzeugs 7 und/oder des zweiten weiteren Fahrzeugs 8 handeln. Beispielsweise werden mit der elektronischen Recheneinrichtung 13 die Daten, insbesondere zunächst, typisiert und/oder kategorisiert, beispielsweise in Abhängigkeit von einem jeweiligen erfassten Fahrzeugtyp des jeweiligen weiteren Fahrzeugs 7, 8. Dadurch kann beispielsweise ermittelt werden, ob es sich bei dem jeweiligen weiteren Fahrzeug 7, 8 beispielsweise um einen Personenkraftwagen oder einen Lastkraftwagen (LKW) handelt. Ferner können Daten weitere Informationen, wie beispielsweise eine, insbesondere aktuelle, Geschwindigkeit des jeweiligen weiteren Fahrzeugs 7, 8, das heißt beispielsweise des jeweiligen ersten weiteren Fahrzeugs 7 und/oder des jeweiligen zweiten weiteren Fahrzeug 8, und/oder eine benutzte Fahrspur, umfassen. Diese weiteren Informationen können ebenfalls in das Erzeugen der virtuellen Karte 14, das heißt insbesondere in das zuvor genannte Modell, einfließen. Es können Fahrzeuge auf einer gleichen Fahrstrecke, insbesondere in gleicher Fahrtrichtung und/oder auf einer Gegenfahrbahn, und/oder Fahrzeuge, die bezogen auf das Kraftfahrzeug 1 im Voraus fahren, die Informationen und/oder die Daten konsolidieren und insbesondere an das Kraftfahrzeug 1 weitergeben.

Insgesamt ist erkennbar, dass mittels des Fahrerassistenzsystems 3 ein Verfahren zur Ermittlung und Visualisierung von Verkehrsteilnehmern, das heißt insbesondere zur Verkehrsteilnehmerprognose, geschaffen werden kann. Hierbei kann beispielsweise eine prognostizierte Position von Fahrzeugen aufgrund prognostizierter Geschwindigkeit mittels der erzeugten virtuellen Karte 14 dem Fahrer angezeigt werden. Dabei kann dem Fahrer insbesondere mitgeteilt werden, dass er beispielsweise, insbesondere von dem Überholvorgang, mit Gegenverkehr in Höhe der zuvor genannten Wahrscheinlichkeit rechnen kann. Dadurch kann der Fahrer in dem manuellen Fahrbetrieb sich insbesondere durch Wiedergabe der virtuellen Karte, das heißt durch in der Karte enthaltene Informationen, sein Fahrverhalten anzupassen, und beispielsweise den Überholvorgang nicht durchzuführen. Es kann mittels der elektronischen Recheneinrichtung 13 eine Gefährdungswahrscheinlichkeit, beispielsweise für eine kommende Kreuzung und/oder Überholmanöver, anhand von Sensordaten und/oder Kartendaten ermittelt werden. Hieraus kann die virtuelle Karte 14 erzeugt werden, insbesondere mit der Position von allen Fahrzeugen und Phantom-Fahrzeugen. Die virtuelle Karte 14 kann im Backend gepflegt werden. Ferner kann dem Kraftfahrzeug 1 beziehungsweise dessen Fahrer anhand der virtuellen Karte 14 eine potentielle Gefahr mitgeteilt werden, sobald die Gefahrwahrscheinlichkeit signifikant ist, sodass der Fahrer sein Fahrverhalten anpassen kann.

## Patentansprüche

1. Fahrerassistenzsystem (3) für ein Kraftfahrzeug (1), mit einer Positionserfassungseinrichtung (4) zum Erfassen einer Position (5) des Kraftfahrzeugs (1), mit einer Empfangseinrichtung (9) zum Empfangen von wenigstens ein weiteres Fahrzeug (7, 8) charakterisierenden Daten, welche zumindest eine Position (10) des weiteren Fahrzeugs (7, 8) beschreiben, mit einer elektronischen Recheneinrichtung (13), welche dazu ausgebildet ist,
• in Abhängigkeit von den mittels der Empfangseinrichtung (9) empfangenen Daten die Position (10) des weiteren Fahrzeugs (7, 8) zu ermitteln und
• in Abhängigkeit von der erfassten Position (5) des Kraftfahrzeugs (1) und in Abhängigkeit von den empfangenen Daten eine eine Umgebung (6) des Kraftfahrzeugs (1) charakterisierende, virtuelle Karte (14) mit der erfassten Position (5) des Kraftfahrzeugs (1) und mit der ermittelten Position (10) des weiteren Fahrzeugs (7, 8) zu erzeugen,
**dadurch gekennzeichnet, dass**
die elektronische Recheneinrichtung (13) dazu ausgebildet ist, in einem manuellen Fahrbetrieb des Kraftfahrzeugs (1) ein Steuersignal (15) zum Anzeigen der virtuellen Karte (14) für einen Fahrer des Kraftfahrzeugs (1) an eine optische Anzeigeeinrichtung (16) des Kraftfahrzeugs (1) zu senden.

2. Fahrerassistenzsystem (3) nach Anspruch 1,
**dadurch gekennzeichnet, dass**
die elektronische Recheneinrichtung (13) dazu ausgebildet ist, für eine Fahrsituation des Kraftfahrzeugs (1) ein Gefährdungskriterium zu prüfen, wobei mittels der elektronischen Recheneinrichtung (13) beim Erfüllen des Gefährdungskriteriums das Senden des Steuersignals (15) an die optische Anzeigeeinrichtung (16) erfolgt.

3. Fahrerassistenzsystem (3) nach Anspruch 2,
**dadurch gekennzeichnet, dass**
die elektronische Recheneinrichtung (13) dazu ausgebildet ist, wenigstens eine ein Fahrverhalten des Fahrer des Kraftfahrzeugs (1) charakterisierende Information abzurufen, von welcher das Gefährdungskriterium abhängt.

4. Fahrerassistenzsystem (3) nach Anspruch 2 oder 3,
**dadurch gekennzeichnet, dass**
die Daten wenigstens eine ein Fahrverhalten eines Fahrer des weiteren Fahrzeugs (7, 8) charakterisierende Information umfassen, von welcher das Gefährdungskriterium und/oder das Ermitteln der Position (10) des weiteren Fahrzeugs (7, 8) abhängt.

5. Fahrerassistenzsystem (3) nach einem der vorhergehenden Ansprüche, **dadurch gekennzeichnet, dass**
die elektronische Recheneinrichtung (13) dazu ausgebildet ist, in Abhängigkeit von den mittels der Empfangseinrichtung (9) empfangenen Daten eine Wahrscheinlichkeit zu ermitteln, dass sich das weitere Fahrzeug (7, 8) an einer definierten Position befindet, welche unterschiedlich zu der ermittelten Position (10) des weiteren Fahrzeugs (7, 8) ist.

6. Fahrerassistenzsystem (3) nach Anspruch 5,
**dadurch gekennzeichnet, dass**
die elektronische Recheneinrichtung (13) dazu ausgebildet ist, ein Warnungssteuersignal (20) zum Ausgeben einer Warnung an eine Ausgabeeinrichtung (21) des Kraftfahrzeugs (1) zu senden, wenn die mittels der elektronischen Recheneinrichtung (13) ermittelte Wahrscheinlichkeit höher als ein Schwellenwert ist.

7. Fahrerassistenzsystem (3) nach Anspruch 5 oder 6,
**dadurch gekennzeichnet, dass**
die elektronische Recheneinrichtung (13) dazu ausgebildet ist, ein Objekt an der definierten Position in der virtuellen Karte (14) zu erzeugen, wenn die mittels der elektronischen Recheneinrichtung (13) ermittelte Wahrscheinlichkeit höher als ein Schwellenwert ist.

8. Fahrerassistenzsystem (3) nach einem der vorhergehenden Ansprüche, **gekennzeichnet durch**
eine Umgebungserfassungseinrichtung (22) zum Erfassen der Umgebung (6), wobei die elektronische Recheneinrichtung (13) dazu ausgebildet ist, beim Erfassen des weiteren Fahrzeugs (7, 8) in der Umgebung (6) mittels der Umgebungserfassungseinrichtung (22) die ermittelte Position (10) in Abhängigkeit von dem mittels der Umgebungserfassungseinrichtung (22) erfassten weiteren Fahrzeug (7, 8) zu korrigieren.

9. Kraftfahrzeug (1) mit einem Fahrerassistenzsystem (3) nach einem der vorhergehenden Ansprüche.

10. Verfahren zum Betreiben eines Kraftfahrzeugs (1), bei welchem mittels einer Positionserfassungseinrichtung (4) eine Position (5) des Kraftfahrzeugs (1) erfasst wird, mittels einer Empfangseinrichtung (9) wenigstens ein weiteres Fahrzeug (7, 8) charakterisierenden Daten empfangen werden, welche zumindest eine Position (10) des weiteren Fahrzeugs (7, 8) beschreiben, und mittels einer elektronischen Recheneinrichtung (13),
• in Abhängigkeit von den mittels der Empfangseinrichtung (9) empfangenen Daten die Position (10) des weiteren Fahrzeugs (7, 8) ermittelt wird und
• in Abhängigkeit von der erfassten Position (10) des Kraftfahrzeugs (1) und in Abhängigkeit von den empfangenen Daten eine eine Umgebung (6) des Kraftfahrzeugs (1) charakterisierende, virtuelle Karte (14) mit der erfassten Position (5) des Kraftfahrzeugs (1) und mit der ermittelten Position (10) des weiteren Fahrzeugs (7, 8) erzeugt wird,
**dadurch gekennzeichnet, dass**
in einem manuellen Fahrbetrieb des Kraftfahrzeugs (1) mittels der elektronischen Recheneinrichtung (13) ein Steuersignal (15) zum Anzeigen der virtuellen Karte (14) für einen Fahrer des Kraftfahrzeugs (1) an eine optische Anzeigeeinrichtung (16) des Kraftfahrzeugs (1) gesendet wird.
